# EUROPEAN PATENT APPLICATION

(11) **EP 1 681 537 A1**
(43) Date of publication of application: **19.07.2006**
(21) Application number: 05000943.0
(22) Date of filing: 18.01.2005
(51) Int. Cl.: G01C 21/34

(54) **Navigation system with animated junction view**

(71) Applicant: Harman Becker Automotive Systems (Becker Division) GmbH, 76307 Karlsbad (DE)
(72) Inventor: Büle-Drews, Christian, 22159 Hamburg (DE); Grabs, Volker, 22083 Hamburg (DE)
(74) Representative: Grünecker, Kinkeldey, Stockmair & Schwanhäusser Anwaltssozietät

(57) **Abstract**

The present invention relates to a vehicle navigation system comprising a location system, means for speed determination, a navigation database, a junction view database, a CPU, a display device, an animation database comprising animated data of junction views and a player configured to play the animated data.

The present invention also relates to a method for displaying an animated junction view to a display device of a vehicle navigation system, comprising the steps of providing an animation database comprising animated data of junction views providing a player configured to play the animated data, synchronize the player with the actual position and speed of the vehicle; determining whether or not a vehicle is approaching a junction and playing the animated data, if a junction is approached by the vehicle.

## Description

### Field of Invention

The present invention relates to a navigation system for a vehicle and a method for displaying a junction view. In particular, it relates to a navigation system with a display device, which provides a three-dimensional perspective view and a method for displaying a junction view in a three-dimensional perspective.

### Prior Art

The use of navigation systems in vehicles becomes increasingly prevalent. Usually on board navigation computer systems analyzes the combined data provided by GPS (Global Positioning System) satellites and received by an on-board GPS sensor and provided by motion sensors as well as a digital map and thereby determine the actual position and velocity of a vehicle with increasing preciseness.

Known navigation systems typically use electronic maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position. The independent movement of the vehicle mark and the map is achieved by displaying simultaneously multiple display layers that show different kinds of information.

More elaborated navigation systems provide enlarged views of junctions along the guide route where the driver should turn, in order to help the driver to identify more accurately the route to be taken to the predetermined destination. The displayed images represent simplified synthesized views from preferably as close as possible to the driver's perspective.

Varieties of navigation systems have been developed that provide three-dimensional perspective views which, in principle, are more easily understood by many drivers. Elaborated systems allow for displaying the intersection or crossing approached by the vehicle at variable angles relative to the road depending on the complexity of the intersection. Herein, the terms "intersection" and "junction" are used in an interchangeable way.

However, if the complexity of the road geometry in the forward path of the vehicle exceeds some limit, a proper orientation is problematic for the driver. Thus, for both two-and three-dimensional representation there is a risk that the driver looses proper orientation and gets confused by the displayed digital map. Confusion increases with increasing complexity of intersections, for example, when roads are intersecting a different height levels or in rotary turns with roads in close proximity.

One main problem with the accurate route guidance at a junction or a crossing approached by a vehicle lies in the fact that whereas the driver has to orientate himself with respect to distances and perspectives from his actual position, the navigation system provides him with an enlarged view of the junction in a perspective view from some standpoint which in general differs more or less from the actual position of the vehicle. Adjustment from the synthesized information to reality may prove to be both time consuming and worrisome.

### Description of the invention

In view of the above-mentioned drawbacks and deficiencies, the problem underlying the present invention is to provide a vehicle navigation system and a route guidance method that safely guides a driver at a junction by an improved visualization.

The problem is solved by a vehicle navigation system comprising a location system, means for speed determination, a navigation database, a junction view database, a CPU and a display device that is characterized by an animation database comprising animated data of junction views and a player configured to play the animated data according to claim 1 of the present invention.

The problem is also solved by the inventive method for displaying an animated junction view to a display device of a vehicle navigation system according to claim 8, comprising the steps of providing an animation database comprising animated data of junction views, providing a player configured to play the animated data, synchronize the player with the actual position and speed of the vehicle, determining whether or not a vehicle is approaching a junction and playing the animated data, if a junction is approached by the vehicle.

The junction view database may advantageously comprise information about the junction position, the road topology, attributes like street names as well as standard bitmaps for the sky and the skyline. The animation database may preferably comprise animated data for the road topology, topographic data as, for example, bridges, and sign posts, lights, zebra crossings, beacons or the like. In principle, the animation database may include animated data of any desired scenery.

The animated data consists of individual images similar to the conventional static bitmaps or to static vector graphics, which allow to representatively displaying the perspective characteristics, in particular, the road topology, of at least the forward path and intersecting roads. These individual images are advantageously displayed in real time in a time series (animated) of the individual images with a speed that depends on the location and speed of the vehicle.

The animated display of the road characteristics in a perspective view that is carried out by the player allows for an unprecedented realistic synthetic view of the forward path, in particular, of a junction approached by the vehicle. Since during the approach the perspective view continuously changes, real-time animation of the synthesized perspective views is an appropriate highly advantageous means for improving the driver's orientation.

Further, it is highly desirable to employ synchronization means facilitated to synchronize the player with the actual position and speed of the vehicle. Whereas, conventional static junction views show synthesized perspective from some standpoint that is at the best in close proximity to the perspective view from the actual position of the vehicle, such a synchronization means allows, in principle, for a correct perspective view. By means of an accurate determination of the location as well as speed of the vehicle the CPU can calculate which individual image of the animated data is to be displayed at which time in order to guarantee that the perspective view of the junction is correct for the actual position of the driver within a high order of accuracy. Consequently, the driver's orientation is highly improved, since matching of the synthesized view and the realistic view can be achieved much easier and faster.

In a preferred embodiment of the present invention means for determining whether or not a vehicle is approaching a junction may additionally be employed. These means are operatively connected to the CPU and the CPU controls the player configured to play animated data only, if the vehicle approaches a junction.

Since the animated perspective view is particularly useful in the vicinity of junctions, it may be sufficient to display animated data when the vehicle actually approaches a junction, whereby the limited computer resources of present navigation systems can be economized. Means for determining whether a junction is approached may comprise sensor means as well as a determination of close-by junctions by means of map matching on the grounds of a map database.

Furthermore, the player may not only play animated data but also displays non-animated data. Animated and non-animated data can be displayed concurrently by the same player using different display layers, i.e. at least one display layer for the animated data and at least one different layer for the non-animated data. Again, computer resources can be economized thereby, since, for example, the sky and the skyline usually must not be animated in order to improve the driver's orientation.

Preferably, the animation database comprises animated data that consist of animated data entities and the animated data entities may comprise bitmaps and/or vector graphics and/or metafiles. Metafiles are combined bitmaps and vector graphics. The usage of different data formats allows for a variety of presentations of the synthesized perspective view, in particular, of the perspective view of a junction. Three-dimensional items included in the animated junction view can be displayed in the respective correct perspective, if they are represented by vector graphics.

The animated data entities may comprise advantageously representations of a junction and/or landmarks and/or beacons and/or traffic lights and/or zebra crossings and/or signposts. Animation of different kinds of displayed items may further help the driver to orientate himself and to positively choose the right road at a junction.

Whereas the animated data may be provided in any suitable format, it may be available in a digital video format as the AVI or the MPEG4 format which both are widely-used and well-tested.

Additional features and advantages of the invention will be described with reference to the drawings:
Figure 1 shows integral parts of a particular embodiment of the present invention.
Figure 2 shows integral parts of another particular embodiment of the present invention.
Figure 3 shows a flow diagram illustrating the method of displaying an animated junction view according to an example of the present invention.
Figure 4 illustrates an animated junction view according to the present invention.

In the description, reference is made to the accompanying figures that are meant to illustrate preferred embodiments of the invention. It is understood that such embodiments do not represent the full scope of the invention. Similar elements in different Figures have been given the same reference numeral for purposes of consistency and simplicity.

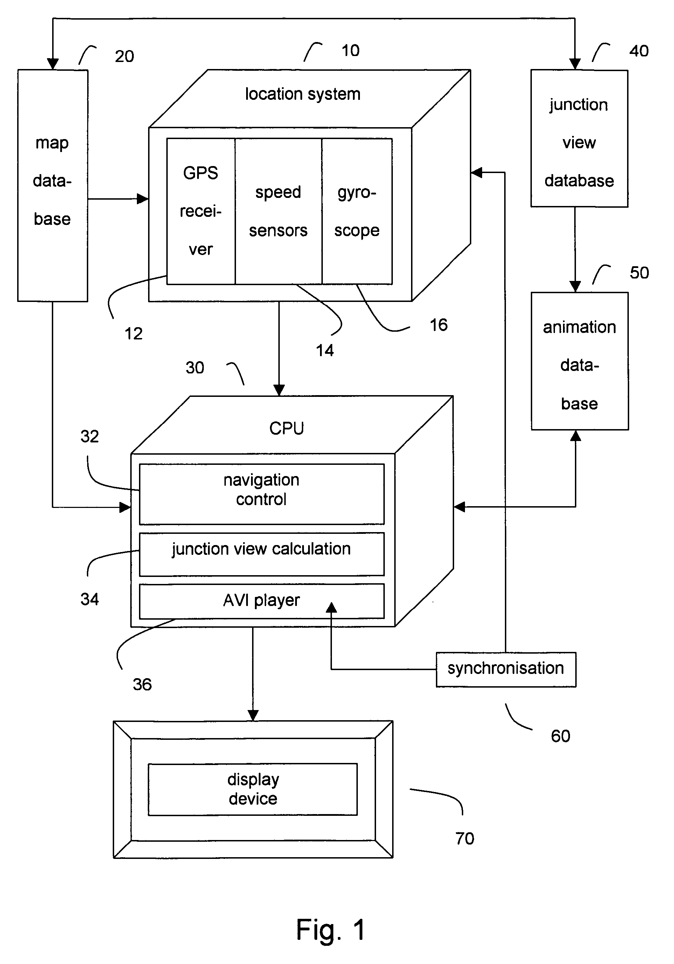

The present invention relates to a navigation system with an animated junction view. Figure 1 shows one embodiment of the present invention. A location system 10 provides the data necessary for a precise determination of the actual position of the vehicle. Such a system comprises at least a GPS receiver 12 that receives radio waves transmitted from GPS satellites, speed sensors 14, for example, ABS wheel sensors that detect directly the mileage of the vehicle, and a gyroscope sensor 16, for example, a piezo sensor detecting crystal vibrating in one plane to measure rotation of the vehicle around an axis that is directed perpendicular to the road.

Each of the elements of the location system 10 involves their own errors and, thus, it is desirable that they are combined in a way to compensate for such errors. Desirably, state-of-the-art Karman filters may be employed to improve the accurateness of the measurements. Depending on the accurateness of the sensors, it may be preferred to have them supplemented by, for example, geomagnetic sensors or sensors that measure directly the steering angle. Map matching with the data provided by a map database 20 allows for locating the vehicle in a digital map.

The information provided by the location system 10 and the map database 20 is processed by a central processor unit (CPU) 30 of the navigation system. The navigation control 32 can locate the vehicle with high accuracy on the base of the aforementioned data and provide the user with guidance directions. The CPU 10 may comprise one or more individual computing processors. If more than one processor is available, which may be preferable with respect to computing time, it may be advantageous to have them to share memory.

According to one preferred embodiment of the present invention the data in the map database 20 exhibits references to the data of a junction view database 40. The junction view database 40, in one alternative embodiment, comprises, among others, bitmaps of junction views as well as standard bitmaps for different road geometries, a skyline and a sky, preferably with the lightness depending on the local time, street names and information about the position of the cursor.

If the vehicle approaches a junction, a representation of the respective junction is provided by the junction view database 40. Alternatively, all relevant bitmap data may be included in the map database 20 instead of the junction view database 40. In a further alternative embodiment all relevant bitmap data may be included in an animated database 50.

Preferably, the junction view database 40 contains references to the animation database 50. The animated data consists of data units that are according to one alternative embodiment stored as standard bitmaps. Preferably, the data units of the animated data consist of bitmaps and/or vector graphics and/or metafiles, i.e. combined bitmaps and vector graphics. The animation data consist of a temporal sequence of individual static images. The speed at which the animation takes place depends on the location and speed of the vehicle. The animation data show perspective views of the approached junction, i.e. number of lanes, slopes, branches and crossroads etc. Moreover, the animation data may comprise topographical objects as bridges and administrative buildings, and also signposts and environmental views of representing an urban, rural or industrial environment or a mountain landscape.

A junction view calculation unit 34 of the CPU 30 processes the data provided by the location system 10 and addresses the animation database 50 to obtain the actually relevant animated junction view data. In an alternative embodiment the junction view calculation unit 34 produces animated data from standard images provided by an animation database 50 and/or a junction view database 40 and/or a map database 20. However, depending on the details of the animated view the latter embodiments could easily result in an undue load of the CPU, at least for the CPU power presently incorporated in vehicle navigation systems.

In one preferred embodiment the animated data is available in the Audio Video Interleave Format (AVI). The AVI data is provided to an AVI player 36. The animation starts and ends at well-defined positions ahead and behind of the junction. It is highly desirable that the AVI player is synchronized with the data provided by the location system 10. Thereby the elapsed time is synchronized with the driven distance, and it can be guaranteed that the synthesized animated junction view is displayed on a display device 70 synchronously to the actual position of the vehicle.

The actual section in view that is shown by the display device 70 may be a geographical section calculated as a segment of a circle given by an angle of about 90° and a radius of about 10 km, approximately corresponding to the human visual angle at the horizon.

Besides the animated data, information that is mainly independent of the accurate position of the driver can additionally be displayed by means of still standard bitmaps. In this case, the complete view comprises display layers that are concurrently displayed and comprise both relevant still bitmap images and animated images.

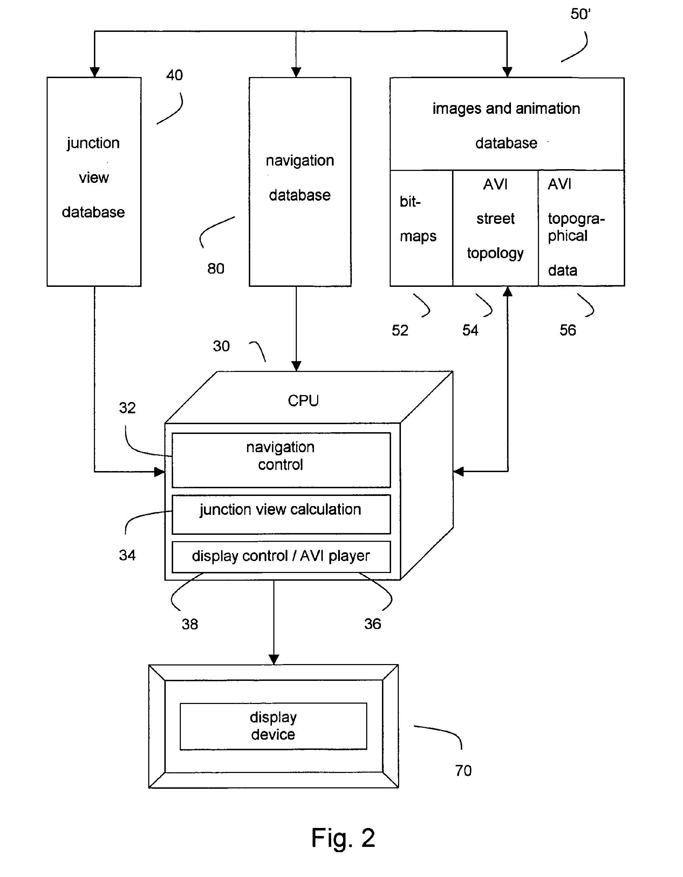

As shown in Figure 2, a particular embodiment of a navigation system with an integrated animated junction view comprises a central computing processor unit 30, a navigation database 80, a junction view database 40 and an images and animation database 50'. The processor unit 30 downloads data from the databases and displays synthesized views to the user by a display device 70.

The navigation database 80 comprises data sampled by, for example, a GPS receiver, motion sensors and the like as well as a digital navigation map. Based on this data the CPU 30 determines by means of a navigation control 32 the actual position and speed of the vehicle. It may be advantageous that the navigation database 80 has references to a junction view database 40. The junction view calculation unit 34 of the CPU 30 addresses the animation database 50' to obtain the actually relevant animated junction view data.

According to a particular embodiment of the present invention the junction view database 40, in particular, comprises information about the underlying road geometry, references to the bitmaps and animated data to be displayed. Desirably, additional information about the junctions as street names is also included. Moreover, the junction view database 40 may comprise standard bitmaps representing, in particular but not exclusively, standard road geometries, skylines and the sky. Preferably, the junction view data base has references to the images and animation database 50'.

The images and animation database 50' comprises bitmaps 52, in particular, representing perspective 3-dimensional views of the forward route and the different lanes. Desirably topographical objects, for example, bridges, and emergency and administrative buildings are also represented by bitmaps. Other items that are advantageously incorporated in the bitmaps data 52 comprise signposts, traffic lights, beacons and zebra crossings.

In a preferred embodiment of the present invention the animation data 54 and 56 is available in the AVI format. The animation data 54 and 56 comprise the street topology and, desirably, topographical data 56. The animated data 54 consists of individual images. In alternative embodiments these images are available as bitmaps and/or vector graphics and/or metafiles, i.e. combined bitmaps and vector graphics. In one particular embodiment the AVI data 54 exclusively comprises animated bitmaps provided by the bitmap data section 52 of the images and animation database 50'.

The CPU 30 determines the position and speed of the vehicle and calculates the perspective junction view, if the vehicle approaches a junction and a junction view is available from the junction view database 40 and the images and animation database 50'. The CPU 30 compares the information about the actual position of the vehicle with the information provided by the navigation database 80 and/or the junction view database 40 to determine the actual perspective view to be displayed. If animated data 54 and 56 is available for the junction approached by the vehicle, an AVI player 36 mixes bitmaps 52 and animated data 54 and 56 and plays the combined animated junction view according to the present invention on a display device 70.

It may be advantageous to employ a separate display control 38 in order to control the combined display of display layers that may each comprise either still images represented in the bitmap format 52 or animated AVI data 54 and 56.

Preferably, the animated data 54 and 56 played by the AVI player 36 is continuously synchronized with the information about the actual position and speed of the vehicle provided by the permanently updated navigation database 80. Thus, the display device 70 shows the correct perspective view of the approached junction with high accuracy.

The full sample of display layers concurrently shown at one moment may comprise, for example, a bitmap representation of the sky, a bitmap representation of a skyline, the road geometry including relevant details as a synchronized animation and signposts again as standard bitmaps.

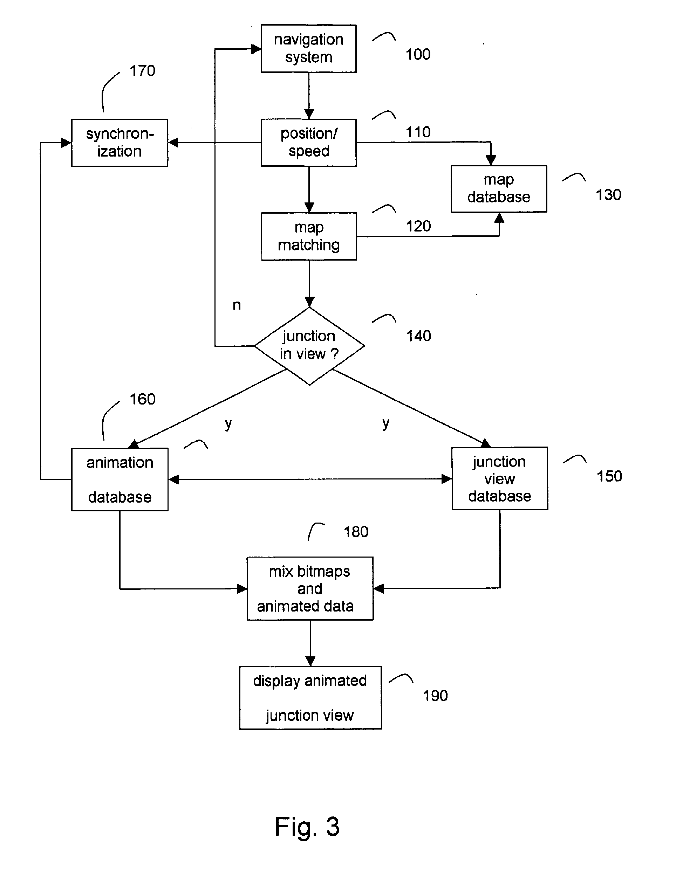

The process of displaying an animated junction view according to one embodiment of the present invention is generally illustrated with reference to Figure 3. A vehicle is on its route recommended by the navigation system 100. The navigation system 100 continuously determines 110 the position of the vehicle, by taking into account data received by a GPS receiver and motion sensors. The actual speed of the vehicle is determined 110 as well.

Map matching 120 allows for a precise location of the vehicle in the digital map provided by some map database 130. Based on the information about the actual position of the vehicle and the driving direction according to the recommended route, the geographical section in view of the driver can be calculated. By means of the map matching and the map database, it can be determined whether a junction comes into view 140 in the forward path of the vehicle according to the predetermined route. If no junction is detected, nothing special happens. The navigation system 100 further on determines the actual position and speed 110 of the vehicle.

If a junction comes into view, the CPU of the navigation system 100 addresses the junction view database 150 to download relevant parameters and standard bitmaps as, for example, the number of lanes, information about the road geometry, street names, sign posts, warning signs etc. In an alternative embodiment such information can be provided by a navigation database.

Preferably, the junction view database 150 exhibits references to the animation database 160. The animation database 160 may comprise AVI data of the street topology and AVI topographical data as well as standard bitmaps. On the grounds of the continuous determination of the actual position and speed 110 of the vehicle, the time at which each individual image of the animated data is to be displayed can be determined. This synchronization 170 guarantees to provide the driver with a perspective view as close to reality as possible.

Standard bitmaps and animation data are eventually mixed 180 in an appropriate way to receive the displayed animated junction view 190 according to the present invention. The player that plays the animated data, or alternatively a display device controller, has to appropriately mix and display the different display layers.

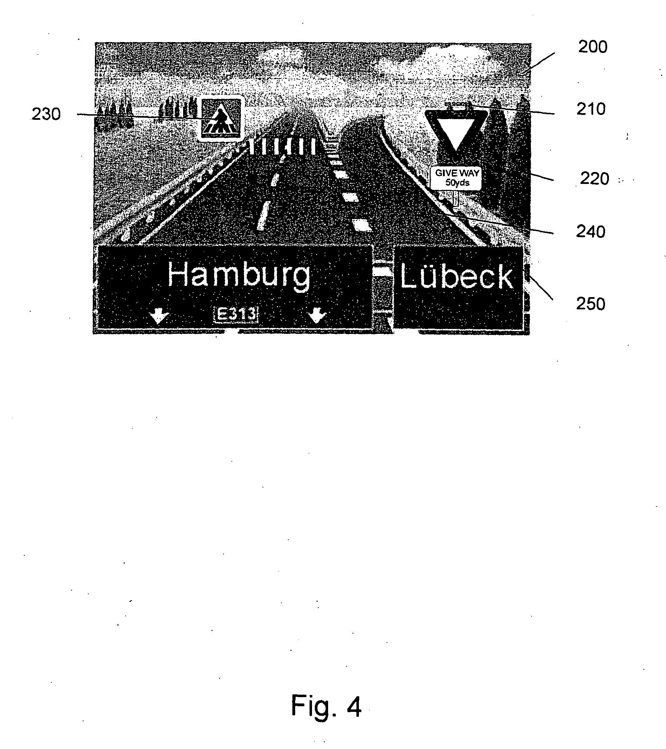

For illustration purposes, an example for an animated junction view is shown in Figure 4. The very background is formed by a synthesized sky 200 as a standard bitmap. A skyline 210 is also displayed as a bitmap. Topographical animated AVI data is included in kind of traffic signs 220 and 230 and a zebra crossing. The perspective view of the road geometry 240, as viewed from the actual position of the driver, is animated by playing the respective AVI data in real time. The foreground display layer, in this example, shows signposts 250 again as standard bitmaps.

All previously discussed embodiments are not intended as limitations but serve as examples illustrating features and advantages of the invention. It is to be understood that some or all of the above described features can also be combined in different ways.

## Claims

1. A vehicle navigation system comprising a location system, means for speed determination, a navigation database, a junction view database, a CPU and a display device that is **characterized by**
an animation database comprising animated data of junction views; and
a player configured to play the animated data.

2. The vehicle navigation system of claim 1, further comprising synchronization means facilitated to synchronize the player with the actual position and speed of the vehicle.

3. The vehicle navigation system of one of the above claims, further comprising
means for determining whether or not a vehicle is approaching a junction;
where the means for determining whether or not a vehicle is approaching a junction are operatively connected to the CPU; and
the CPU controls the player configured to play animated data, only if the vehicle approaches a junction.

4. The vehicle navigation system of one of the above claims, wherein the player configured to play animated data also displays non-animated data.

5. The vehicle navigation system of one of the above claims, wherein the animation database comprises animated data that consist of animated data entities and the animated data entities comprise bitmaps and/or vector graphics and/or metafiles.

6. The vehicle navigation system of claim 5, wherein the animated data entities comprise representations of a junction and/or landmarks and/or beacons and/or traffic lights and/or zebra crossings and/or signposts.

7. The vehicle navigation system of one of the above claims, wherein the animated data included in the animation database is available in a digital video format, in particular, the AVI or the MPEG4 format.

8. A method for displaying an animated junction view to a display device of a vehicle navigation system, comprising the steps of
providing an animation database comprising animated data of junction views;
providing a player configured to play the animated data;
synchronize the player with the actual position and speed of the vehicle;
determining whether or not a vehicle is approaching a junction; and
playing the animated data, if a junction is approached by the vehicle.

9. The method of claim 8, wherein the animated data consist of animated data entities and the animated data entities comprise bitmaps and/or vector graphics and/or metafiles that represent, in particular, junctions and/or landmarks and/or beacons and/or traffic lights and/or zebra crossings and/or signposts.

10. The method of claim 8 or 9, wherein the animated data is available in the AVI or the MPEG4 format.
